# EUROPÄISCHE PATENTANMELDUNG

(11) **EP 2 573 680 A1**
(43) Veröffentlichungstag der Anmeldung: **27.03.2013**
(21) Anmeldenummer: 11182168.2
(22) Anmeldetag: 21.09.2011
(51) Int. Cl.: G06F 11/14

(54) **Verfahren zur Wiederherstellung eines definierten Zustandes eines Datenverarbeitungsgerätes**

(71) Anmelder: Siemens Aktiengesellschaft, 80333 München (DE)
(72) Erfinder: Munz, Vincent, 76698 Ubstadt-Weiher (DE)

(57) **Zusammenfassung**

Die Erfindung betrifft ein Verfahren zur Wiederherstellung eines definierten Zustandes eines Datenverarbeitungsgerätes (1), wobei mittels auf einem Backup-Medium (9) hinterlegten Backup-Daten der definierte Zustand wiederhergestellt wird. Dadurch, dass mittels eines Servers (3) auf das Backup-Medium (9) zugegriffen wird und mittels des Servers (3) die Backup-Daten dem Datenverarbeitungsgerät (1) übermittelt werden, wird eine vereinfachte Wiederherstellung eines Zustandes des Datenverarbeitungsgerätes (1) ermöglicht.

## Beschreibung

Die Erfindung betrifft ein Verfahren zur Wiederherstellung eines definierten Zustandes eines Datenverarbeitungsgerätes. Darüber hinaus betrifft die Erfindung eine Anordnung mit einem Server und einem Datenverarbeitungsgerät, welches zur Durchführung des Verfahrens geeignet ist.

Ein derartiges Verfahren bzw. eine derartige Anordnung ist aus dem Siemens-Katalog ST 80/ST PC, Kapitel 5, Ausgabe 2011 bekannt. Ein Datenverarbeitungsgerät in Form eines so genannten Industrie Personal Computers (Industrie-PCs) ist mit einer geeigneten Software versehen, welche zu sichernde bzw. zu schützende Daten einer Festplatte des Industrie-PCs als Backup-Daten auf einem Backup-Medium hinterlegt. Dieses Backup-Medium kann z. B. ein externer Datenträger, beispielsweise eine so genannte DVD, sein. Für den Fall, dass Daten des Industrie-PCs verloren gehen bzw. zerstört sind, können diese Daten, welche einen definierten Zustand des Industrie-PCs repräsentieren, wiederhergestellt werden, indem die Backup-Daten des Backup-Mediums ausgelesen und an die entsprechenden Speicherstellen der Festplatte geschrieben bzw. "zurückgespielt" werden. Unter dem Begriff "Daten" sind in diesem Zusammenhang auch Befehle oder Anweisungen sowie Programme oder sonstige abzuspeichernde Informationen zu verstehen.

Industrie-PCs sind gewöhnlich für einen Einsatz in einem Automatisierungsnetzwerk vorgesehen. Dort ist eine Vielzahl von Industrie-PCs Bestandteil einer so genannten Steuerungs-und/oder Betriebsführungsebene, wobei die Industrie-PCs über das Netzwerk Informationen austauschen. Für jeden dieser Industrie-PCs sind Backup-Sicherungen erforderlich, was einen hohen Verwaltungsaufwand bedeutet. Darüber hinaus kann es im Falle einer Störung eines dieser Industrie-PCs zeitaufwendig sein, die für diesen Industrie-PC vorgesehene Backup-Sicherung zu finden und einzuspielen.

Der Erfindung liegt daher die Aufgabe zugrunde, ein Verfahren der eingangs genannten Art anzugeben, welches eine vereinfachte Wiederherstellung eines Zustandes des Datenverarbeitungsgerätes ermöglicht. Darüber hinaus ist eine Anordnung zu schaffen, welche zur Durchführung des Verfahrens geeignet ist.

Diese Aufgabe wird im Hinblick auf das Verfahren durch die im kennzeichnenden Teil des Anspruchs 1, bezüglich der Anordnung durch die im kennzeichnenden Teil des Anspruchs 5 angegebenen Maßnahmen gelöst.

Die Erfindung geht von der Idee aus, Backup-Sicherungen zentral auf einem Server zu hinterlegen und am Netzwerk angeschlossene Datenverarbeitungsgeräte derart auszubilden, dass diese jeweils automatisch überprüfen können, ob eine dem jeweiligen Gerät zugeordnete Backup-Sicherung auf dem Server hinterlegt ist, wobei schließlich diese dem jeweiligen Gerät zugeordnete Backup-Sicherung in das Gerät "eingespielt" wird.

Vorteilhaft ist, dass das Wiederherstellen eines definierten Zustands des Datenverarbeitungsgerätes und die Verwaltung der Backup-Sicherung automatisiert bewerkstelligt werden können.

In einer Ausgestaltung der Erfindung ist vorgesehen, dass mittels einer BIOS (Basic Input/Output-System)-Routine die Backup-Daten von dem mindestens einen Server angefordert werden. Dadurch kann das Datenverarbeitungsgerät schon im Rahmen seines Hochlaufs das Wiederherstellen eines definierten Zustands einleiten. Erkennt die BIOS-Routine beispielsweise mittels einer Checksummenprüfung, dass relevante auf der Festplatte des Gerätes hinterlegte Daten fehlerbehaftet sind, fordert die Routine vom Server die entsprechenden Backup-Daten an, die nach der Übertragung vom Server zum Gerät an die entsprechenden Speicherstellen der Festplatte geschrieben werden.

In einer weiteren Ausgestaltung der Erfindung ist vorgesehen, mittels der BIOS-Routine aufgrund eines auf dem Server hinterlegten Befehls die Backup-Daten auf dem Backup-Medium abzuspeichern. Aufgrund derartiger Maßnahmen kann im Rahmen des Hochlaufs des Gerätes eine Backup-Sicherung automatisch durchgeführt werden. Es ist nicht erforderlich, dass ein Wartungs- oder Servicetechniker am Gerät vor Ort entsprechende Backup-Sicherungsprogramme aktiviert oder sonstige geeignete Maßnahmen, z. B. Anschließen eines DVD-Laufwerks oder Einlegen einer DVD in dieses DVD-Laufwerk, für die Backup-Sicherung bewerkstelligt.

Dadurch, dass auf dem Backup-Medium weitere Backup-Daten zur Wiederherstellung eines weiteren definierten Zustands hinterlegt werden, wobei mittels der BIOS-Routine dem mindestens einen Server angezeigt wird, welche Backup-Daten dem Datenverarbeitungsgerät zu übermitteln sind, ist es möglich, auch ältere Sicherungsdaten automatisch wieder einzuspielen. Dies bedeutet, dass das Datenverarbeitungsgerät somit auf einen der älteren definierten Zustände, z. B. auf den vorletzten Zustand, zurückgesetzt werden kann.

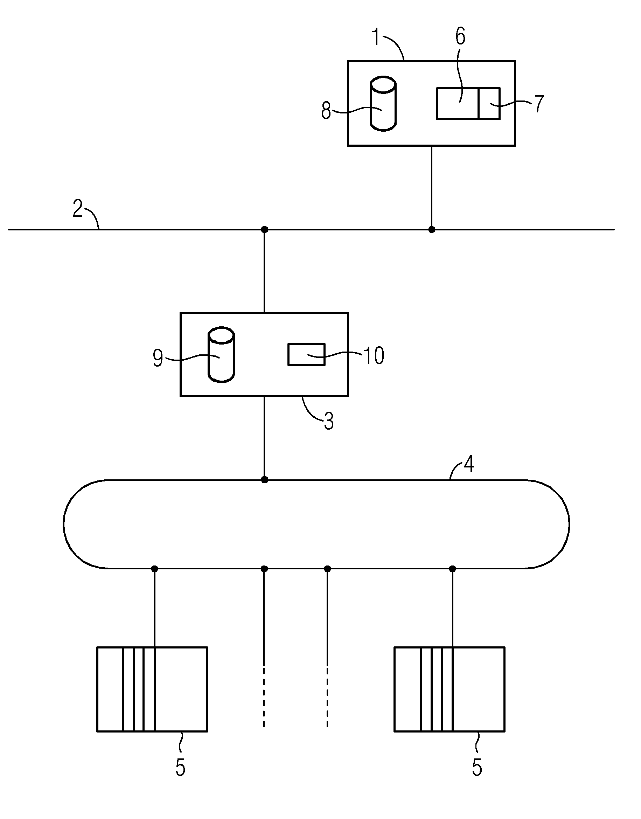

Die Erfindung wird nachfolgend anhand eines Ausführungsbeispiels unter Bezugnahme auf die einzige Figur der Zeichnung näher erläutert. Die Figur der Zeichnung zeigt in stark vereinfachter Form Bestandteile eines Prozessleitsystems.

In der Figur ist mit 1 ein Datenverarbeitungsgerät bezeichnet, das über einen Bus 2 mit einem Server 3 verbunden ist. Dieser Server 3, welcher als so genannter Route Control-, als Batch- oder als Maintenance-Server des Prozessleitsystems ausgebildet sein kann, ist ebenfalls über einen weiteren Bus 4 mit einer Steuerungsebene verbunden. Diese Steuerungsebene umfasst gewöhnlich eine Vielzahl von Automatisierungskomponenten 5, beispielsweise Komponenten in Form von Automatisierungsgeräten, dezentralen Peripheriegeräten und/oder Aktoren und Sensoren.

Das Datenverarbeitungsgerät 1 weist ein so genanntes BIOS (Basic Input/Output-System) 6 auf, welches nach dem Einschalten des Gerätes 1 aktiviert wird und welches während des Hochlaufs des Gerätes 1 beispielsweise Hardwarekomponenten des Gerätes 1 initialisiert und ein Betriebssystem dieses Gerätes 1 startet. Ferner ist das BIOS-System 6 mit einer Routine 7 versehen, die vor dem Start des Betriebssystems eine Kommunikation mit dem Server 3 aufbaut und für eine Wiederherstellung von Backup-Daten für das Gerät 1 vorgesehen ist. Diese BIOS-Routine 7 ist dazu ausgebildet, einerseits während des Herunterfahrens des Gerätes 1 eine Ist-Checksumme von den auf einer Festplatte 8 des Gerätes 1 abgespeicherten Daten zu bilden und diese Ist-Checksumme in einen Speicherbereich eines hier nicht dargestellten Flash-Speichers des Gerätes 1 zu hinterlegen und andererseits während des Hochlaufs des Gerätes 1 die Ist-Checksumme mit einer in einem weiteren Speicherbereich des Flash-Speichers hinterlegten Soll-Checksumme zu vergleichen. Für den Fall, dass die Ist-Checksumme mit der Soll-Checksumme nicht übereinstimmt, was auf fehlerhaft abgespeicherte Daten auf der Festplatte 8 des Gerätes 1 hinweist, fordert die BIOS-Routine 7 dem Gerät 1 zugeordnete Backup-Daten vom Server 3 an, welcher diese Backup-Daten dem Gerät 1 übermittelt. Die BIOS-Routine 7 überschreibt die auf der Festplatte 8 hinterlegten Daten mit den Backup-Daten, wodurch der "alte" fehlerfreie Zustand des Gerätes 1 wiederhergestellt ist. Die Backup-Daten können auf einem Backup-Medium 9 abgespeichert sein, welches Bestandteil des Servers 3 ist, oder auf einem sonstigen geeigneten Backup-Medium, auf welches der Server 3 zugreifen kann.

Ferner ist die BIOS-Routine 7 derart ausgebildet, während des Hochlaufs des Gerätes zu überprüfen, ob auf dem Server 3 ein Befehl oder eine Anweisung 10 zur Erstellung von Backup-Daten hinterlegt ist. Für den Fall, dass ein derartiger Befehl bzw. eine derartige Anweisung 10 abgespeichert ist, übermittelt während des Hochlaufs des Gerätes 1 die BIOS-Routine 7 die auf der Festplatte 8 hinterlegten Daten als Backup-Daten dem Server 3, welcher diese Backup-Daten auf dem Backup-Medium 10 abspeichert. Den Befehl oder die Anweisung 10 erzeugt beispielsweise ein auf dem Server ablauffähiges Setup-Programm, das ferner einem Anwender menügesteuert ermöglicht, durch eine geeignete diesen Befehl oder Anweisung 10 repräsentierende Eingabe eine Backup-Sicherung anzustoßen. Diese Backup-Sicherung erfolgt schließlich in der beschriebenen Art und Weise nach dem Einschalten des Gerätes 1 während dessen Hochlaufs.

Damit lässt sich die Erfindung wie folgt zusammenfassen: Ein Verfahren zur Wiederherstellung eines definierten Zustandes eines Datenverarbeitungsgerätes, wobei mittels auf einem Backup-Medium hinterlegten Backup-Daten der definierte Zustand wiederhergestellt wird, zeichnet sich dadurch aus, dass mittels eines Servers auf das Backup-Medium zugegriffen wird und mittels des Servers die Backup-Daten dem Datenverarbeitungsgerät übermittelt werden. Mittels derartiger Maßnahmen wird eine vereinfachte Wiederherstellung eines Zustandes des Datenverarbeitungsgerätes ermöglicht.

## Patentansprüche

1. Verfahren zur Wiederherstellung eines definierten Zustandes eines Datenverarbeitungsgerätes (1), wobei mittels auf einem Backup-Medium (9) hinterlegten Backup-Daten der definierte Zustand wiederhergestellt wird, **dadurch gekennzeichnet, dass** mittels eines Servers (3) auf das Backup-Medium (9) zugegriffen wird und mittels des Servers (3) die Backup-Daten dem Datenverarbeitungsgerät (1) übermittelt werden.

2. Verfahren nach Anspruch 1, **dadurch gekennzeichnet, dass** mittels einer BIOS-Routine (7) des Datenverarbeitungsgerätes (1) die Backup-Daten von dem mindestens einen Server (3) angefordert werden.

3. Verfahren nach Anspruch 2, **dadurch gekennzeichnet, dass** mittels der BIOS-Routine (7) aufgrund eines auf dem Server (3) hinterlegten Befehls (10) die Backup-Daten auf dem Backup-Medium (9) abgespeichert werden.

4. Verfahren nach Anspruch 2 oder 3, **dadurch gekennzeichnet, dass** auf dem Backup-Medium (9) weitere Backup-Daten zur Wiederherstellung eines weiteren definierten Zustands hinterlegt werden, wobei mittels der BIOS-Routine (7) dem mindestens einen Server (3) angezeigt wird, welche Backup-Daten dem Datenverarbeitungsgerät (1) zu übermitteln sind.

5. Anordnung mit mindestens einem Server (3) und einem Datenverarbeitungsgerät (1), dessen Backup-Daten zur Wiederherstellung mindestens eines definierten Zustands des Datenverarbeitungsgerätes (1) auf einem Backup-Medium (9) hinterlegt sind, wobei das Datenverarbeitungsgerät (1) dazu ausgebildet ist, mittels der Backup-Daten den mindestens einen definierten Zustand wiederherzustellen, **dadurch gekennzeichnet, dass** der mindestens eine Server (3) dazu ausgebildet ist, zur Wiederherstellung des mindestens einen definierten Zustands auf das Backup-Medium (9) zuzugreifen und die Backup-Daten dem Datenverarbeitungsgerät (1) zu übermitteln.

6. Anordnung nach Anspruch 5, **dadurch gekennzeichnet, dass** das Backup-Medium (9) Bestandteil des mindestens einen Servers (3) ist und dass eine BIOS-Routine (7) des Datenverarbeitungsgerätes (1) dazu ausgebildet ist, die Backup-Daten von dem mindestens einen Server (3) anzufordern.

7. Anordnung nach Anspruch 5 oder 6, **dadurch gekennzeichnet, dass** die BIOS-Routine (7) ferner dazu ausgebildet ist, die Backup-Daten aufgrund eines auf dem Server (3) hinterlegten Befehls (10) auf dem Backup-Medium (9) abzuspeichern.

8. Anordnung nach Anspruch 7, **dadurch gekennzeichnet, dass** auf dem Backup-Medium (9) weitere Backup-Daten zur Wiederherstellung eines weiteren definierten Zustands hinterlegt sind, wobei die BIOS-Routine (7) ferner dazu ausgebildet ist, dem mindestens einen Server (3) anzuzeigen, welche Backup-Daten dem Datenverarbeitungsgerät (1) zu übermitteln sind.

9. Datenverarbeitungsgerät für eine Anordnung nach einem der Ansprüche 5 bis 8.
